# EUROPEAN PATENT SPECIFICATION

(11) **EP 0 388 854 B1**
(45) Date of publication and mention of the grant of the patent: **02.11.1994**
(21) Application number: 90105144.1
(22) Date of filing: 19.03.1990
(51) Int. Cl.: C08J 5/18, C08L 89/06

(54) **Collagen fiber sheet**
Faserfolie von Kollagen
Feuille fibreuse de collagène

(30) Priority: 23.03.1989 JP 71074/89
(43) Date of publication of application: 26.09.1990
(73) Proprietor: DAICEL CHEMICAL INDUSTRIES, LTD., Sakai-shi Osaka-fu 590 (JP)
(72) Inventor: Miyagawa, Akira, Ibo-gun, Hyogo (JP); Fujikawa, Akira, Yokohama-shi, Kanagawa (JP)
(74) Representative: Grünecker, Kinkeldey, Stockmair & Schwanhäusser Anwaltssozietät

(56) References cited:
- CH-A- 229 190
- NL-A- 273 590
- US-A- 2 047 136
- US-A- 2 158 265
- US-A- 2 934 446
- DERWENT WPIL (HOST EPOQUE), accession no. 85-308870 [49], Derwent PublicationsLtd, London, GB; & SU-A-1158 636

## Description

Leather is a natural fibrous material having excellent characteristics including fine appearance, hand and feeling, and high strength. However, leather has problems such as limited supply, high price, difficulty in obtaining a large quantity of leather of uniform quality, and limited thickness.

On the other hand, artificial fibrous material, such as synthetic leather, has advantages and disadvantages which are opposite to those of natural leather.

Incidentally, production of leather products inevitably entails production of scraps of leather. Since both tannin leather and chrome leather are tenacious and are hard to shred, most scraps of leather are disposed of or incinerated and some of them are used as fertilizer.

Several processes of decomposing collagen shives have been proposed for the effective reclamation of scraps of leather. These processes are classified roughly into mechanical processes employing a rotary knife type shredder or a kneader, and chemical processes using an acid, an alkali or an enzyme. Various processes of manufacturing regenerated leather using disintegrated leather as material have been proposed.

JP-A 64-70599 discloses the mechanical disintegration to obtain leather powder. GB-A-1143533 discloses the use of collagen fibrils and tropocollagen which can be swollen with water into gels.

When disintegrated by a mechanical leather disintegrated process, leather is reduced to a mixture of fibrous pieces of different diameters, namely, so-called "leather powder", including fiber shives, individual fibers, fiber elements and fibrils.

Having such morphologies, the ingredients of leather powder produced by tearing off natural fiber shives mostly lengthwise are hard to entwine each other and have no intrinsic adhesion. Such comparatively large collagen fibers differing from each other in fiber fineness can be formed in a regenerated leather by binding these collagen fibers by a binder, but such a regenerated leather is unsatisfactory in strength and durability.

The chemical leather disintegrating process, as compared with the mechanical leather disintegrating process, is featured by capability of perfect leather disintegration, however, the chemical leather disintegrating process decomposes leather fibers excessively and gelatinizes the the leather fibers thereby spoiling the intrinsic characteristics of leather, requires complicated processes, has low productivity and is costly. Therefore, the chemical leather disintegrating process is applicable to some specific purpose, such as manufacturing sausage casings, but is unsuitable for manufacturing regenerated leather for the effective reclamation of scraps of leather.

A process for forming a sheet of leather from a pulp consisting of separated fibrils suspended in water is known from US-A-2 158 265. This process comprises the step of treating the leather with beaters in a conventional beating step.

It is the object of the present invention to provide a very elongate leather fiber material consisting of a uniquely random arrangement of leather fibers having incomparable fineness and uniformity and a process for its production.

In accordance with the present invention this is obtained with a sheet of collagen leather comprising collagen fibers of substantially uniform fineness having a diameter in the dried state of 0.02 to 0.3 µm, a length of at least 100 times of the diameter and being arranged at random as a whole, without being bundled, obtainable by cutting natural leather into small pieces being less than about 3 mm in size, preparing an aqueous slurry of 1 to 10 wt% of the cut leather pieces, treating the slurry with a high pressure homogenizer to obtain a viscous slurry and casting and drying the viscous slurry.

It is preferred that the collagen fibers have a diameter distribution such that 99 percent or more of the fibers have a diameter of 0.1 to 0.2 µm.

The diameter distribution can be determined by observing its microscopic picture.

It is further preferred that the sheet of collagen leather essentially consists of collagen fibres.

The collogen fiber sheet of the invention may further comprise collagen fibers being thicker in addition to the above defined fibers.

The sheet of the invention has a strength of 100 to 200 kg/cm² and an air permeation index of 500 to 10,000 s

According to the present invention, there is further provided a process for producing a sheet of collagen leather comprising a collagen fiber of substantially uniform fineness having a diameter in the dried state of 0.02 to 0.3 µm, a length of at least 100 times of the diameter and being arranged at random as a whole without being bundled, said process comprising the steps of cutting natural leather into small pieces being less than about 3 mm in size, preparing an aqueous slurry of 1 to 10 wt% of the cut leather pieces, treating the slurry with a high pressure homogenizer to obtain a viscous slurry and casting and drying the viscous slurry.

The homogenising step is conducted with a homogenizer named by Gaulin model 15M-8TA, practically at the inlet pressure of 500 kg/cm² and the outlet pressure of 0 kg/cm² The casting step may be conducted in the way of paper-making on a net.

The invention further provides a slurry obtainable by cutting natural leather into small pieces being less than about 3 mm in size, preparing an aqueous slurry of 1 to 10 wt% of the cut leather pieces, treating the slurry with a high pressure homogenizer. Preferably, the slurry has a viscosity of 10 Pa·s (10,000 cps) or less at a concentration of 2 wt.%. The slurry is preferred to have a Canadian freeness of 100 to 700 ml.

In the following description, the fineness of fibres is represented, as a rule, by a value measured in a dry state by electron micrography.

The leather fiber material can be used individually or in combination with other materials, can be formed in a desired shape such as a sheet, is uniform in quality, and is capable of forming a tenacious fibrous aggregate having the hand and feeling of leather.

The component fibers of the leather fiber material are uniform in fiber fineness, are very elongate fibers having a length 100 times the diameter or above, are separated individually and are comparatively free to move in water. Therefore, the component fibers entwine easily with each other. A tenacious fibrous aggregate having substantially flat and smooth surfaces can be produced by spreading the suspension in the form of a sheet of, e.g., fibers and drying the sheet of fibers.

Naturally, when desired, a sheet having rough surfaces can be formed by a similar process. The foregoing characteristics of the component fibers of such a sheet can clearly be recognized through the observation of the micrographs of the dried sheet; that is, a three-dimensional network structure is observed. The three-dimensional network structure is constructed by a random arrangement of discrete long fibers having uniform fiber fineness entwining each other without being bundled. The fiber fineness of the fibers is in the range of 0.02 to 0.3 µm, more preferably, 0.04 to 0.2 µm, most preferably, 0.05 to 0.15 µm. The three-dimensional network structure is free from the disadvantages of the conventional leather fiber material formed of leather fibers prepared by a mechanical leather disintegrating process, such as shives of a plurality of fibers, directional fiber bundles, split fibers attributable irregular tearing of fiber bundles, the variety of fiber fineness between the fibers, fibers having irregular fiber fineness and fuzzy fibers. The uniformity in fiber fineness and smoothness of each of the component fibers of the three-dimensional network structure according to the present invention is particularly excellent.

The present process of manufacturing a leather fiber material in accordance with the present invention from scraps of leather will be described in more detail hereinafter by way of example.

Scraps of leather as representative material of the leather fiber material in accordance with the present invention are shaving scraps produced in a chrome-tanning process and scraps produced in cutting sheets of chrome leather and tannin leather. Preferably, those scraps of leather are shredded mechanically so that the fibers are cut in fiber lengths of the order of 3 mm or less before processing the scraps of leather by a high-pressure homogenizer.

The leather fiber stock thus prepared is subjected to a high-pressure homogenizing process in a water suspension of a fiber content in the range of 1 to 10wt%. Although a higher fiber content is desirable from the viewpoint of the ability of the apparatus, the fiber content is limited to secure the fluidity of the liquid.

An apparatus for producing a homogeneous emulsion, for example, the Manton-Gaulin homogenizer (trade name) available in the market, is suitable for use as a high-pressure homogenizer for manufacturing the leather fiber material of the present invention. The Manton-Gaulin homogenizer comprises a high-pressure pump, a valve unit for discharging a processed liquid supplied by the high-pressure pump at a high velocity therethrough, a valve seat unit on which the processed liquid impinges, and a circulating passage connected to the suction side of the high-pressure pump. The construction and actions of such an apparatus are described in known literature, for example, Chemical Engineering, pp. 86-92, May 13, 1974.

Basically, the high-pressure homogenizing process is continuous, however, the leather fiber stock may be supplied in a batch for semicontinuous processing. The number of processing cycles can be determined by calculation from the ratio between the discharge and the charge of the liquid. Process pressure and processing cycles can readily be determined through the comparison of the degree of disintegration of the processed liquid and a desired degree of disintegration. A higher process pressure requires less processing cycles for the same degree of disintegration. Desirably, the temperature and pH of the processed liquid during the high-pressure homogenizing process are 50°C or below and 5 or below, respectively, to obviate the gelatinization of collagen fibers.

Although dependent on the fiber content, the pH, the processing pressure, the processing cycles and the processing temperature, the suspension thus prepared for forming a leather fiber material of the present invention is, in general, a very consistent, homogeneous, stable paste. This suspension is spread in a film and the film is dried to obtain a tenacious aggregate of leather fibers by a known process, such as a papermaking process or a casting process.

The suspension may be used in combination with any of various inorganic materials, such as ceramic fibers and whiskers, and organic materials, such as natural fibers, synthetic fibers and resin emulsions for forming a composite product.

The present invention provides a novel material consisting of a uniform aggregate of leather fibers to enable the formation of a leather fiber product by utilizing its intrinsic binding effect without using any binder. Thus, mass production of sheets, for instance, having the hand and feeling of leather is possible. Although dependent on the degree of disintegration, the density of the sheets formed from, for example, a leather fiber suspension subjected to the homogenizing process 5 to 50 cycles is in the range of 0.38 to 1.0 . The density of a film for sausage casing obtained by a chemical leather disintegrating process is in the range of 1.1 to 1.3, which is higher than that of the sheet of the present invention. Gelatinized fibers are found in electron micrographs of the film for sausage casings.

The leather fiber material of the present invention can be used for manufacturing friction plates in combination with various inorganic and organic industrial materials, for coating materials requiring coating ability, and for forming sheets and composite sheets for industrial and textile materials. Such uses utilize scraps of leather which has not been effectively utilized.

### BRIEF DESCRIPTION OF THE DRAWINGS

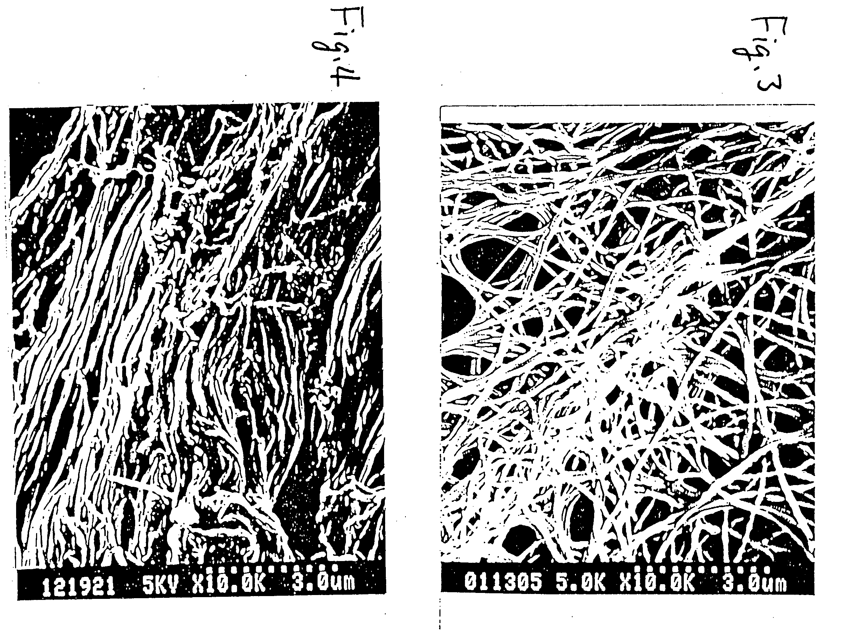

Figures 1 to 3 and 7 are electron micrographs of leather fiber materials embodying the present invention; and
Figures 4 to 6 and 8 are electron micrographs of leather powder and tannin leather respectively.

### Example 1

Shaving scraps of 50% in moisture content produced in a chrome leather product manufacturing process are crushed by a commercially available centrifugal crushing machine. A net with 1 mm meshes is used.

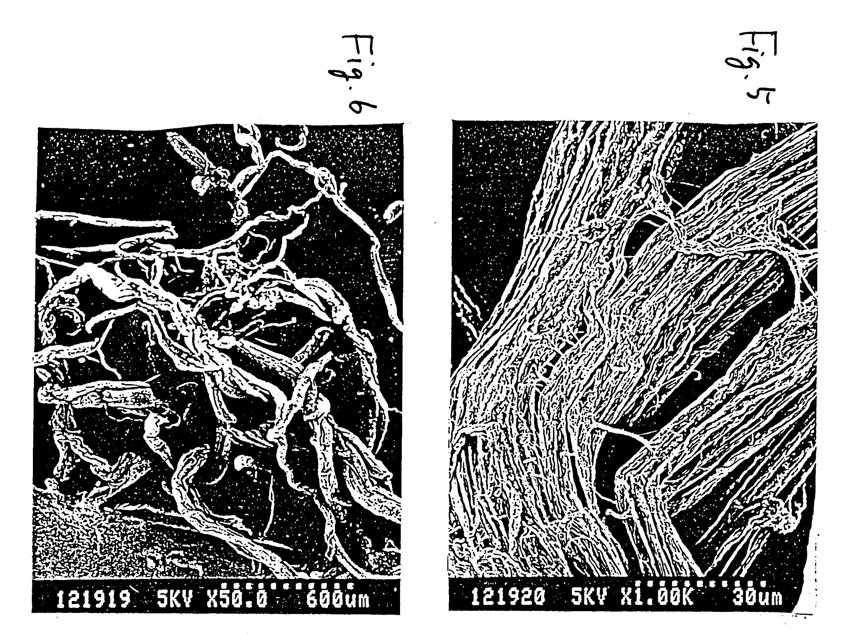

Figs. 4 to 6 are electron micrographs of leather powder produced by the centrifugal crushing machine. The electron micrograph at 50× magnification (Fig. 6) shows branched fiber bundles of indefinite fineness having a width of about 100 µm and a length several to tens times the width. The electron micrograph at 1000× magnification (Fig. 5) shows the structure of the fiber bundles consisting of fine fibers, and partially fibrillate broken ends. It is known from the electron micrograph at 10,000× magnification (Fig. 4) that the fiber bundles are aggregates of directional leather fibers of about 0.1 µm in diameter.

A water suspension having a powder leather content of 2wt.% is prepared by dispersing 80 g of leather powder (50% moisture content) in 1920 g of water. The water suspension of an ordinary temperature (about 25°C) is processed 30 cycles under a pressure of 450 kg/cm² by a high-pressure homogenizer (Gaulin 15M-8TA).

As the homogenizing cycle is repeated, the water suspension is reduced to a consistent slurry. The temperature of the slurry is held at 50°C or below by cooling. The temperature of the slurry rises beyond 90°C to accelerate the gelation and gelatinization of collagen fibers when the slurry is not cooled during the homogenization.

A leather fiber liquid thus prepared has the following properties.

Viscosity (BL type viscometer, Rotor: No. 4, Speed: 60 rpm):
3.2 Pa·s (3200 cps)
3.4 Pa·s (3400 cps) (twenty days after preparation)
pH: 2.6
The slurry is formed into a film on a glass plate by casting, and then the film is dried at 50°C or below to obtain a sheet.

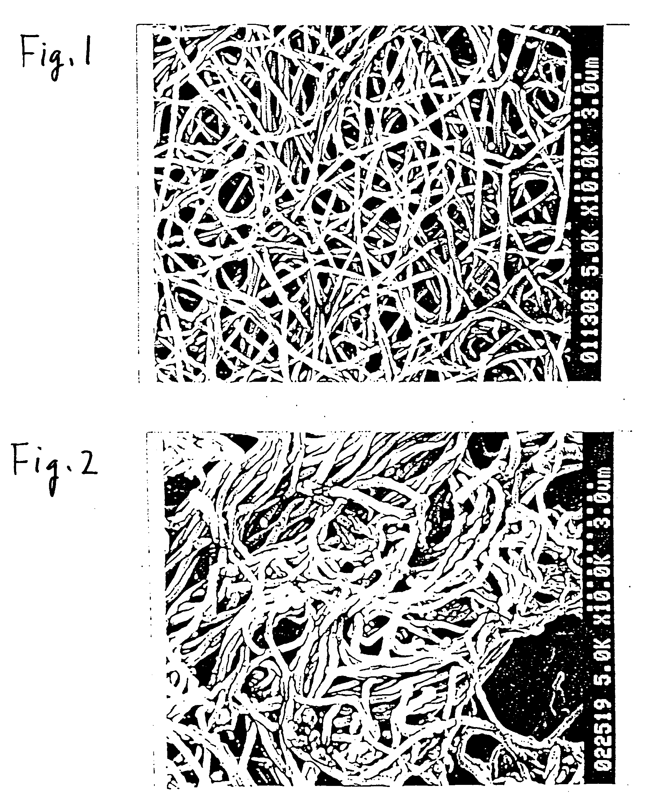

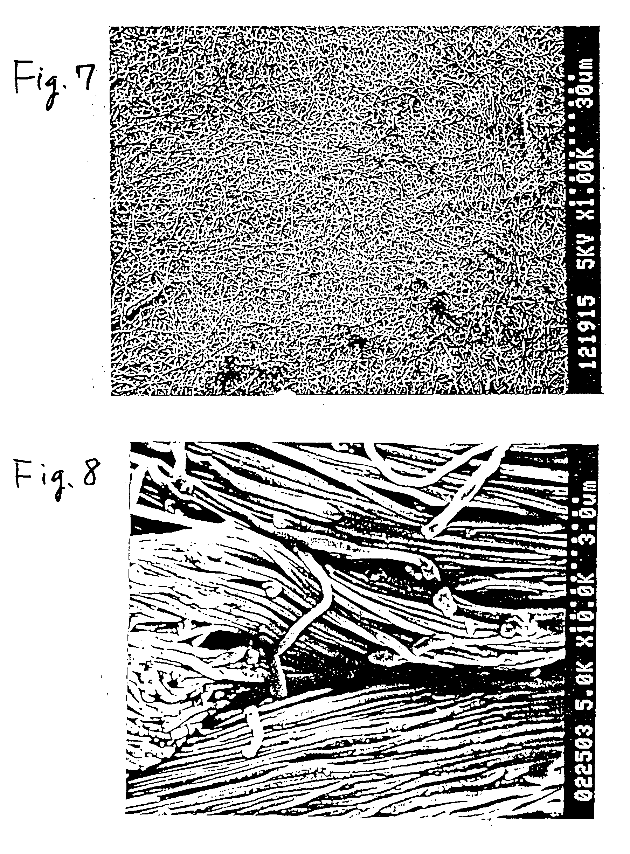

Fig. 1 is an electron micrograph at 10,000× magnification of the sheet. The leather is disintegrated substantially completely into smooth, long fibers of uniform fineness having a diameter of about 0.1 µm, and the fibers entwine each other in a random arrangement to form a three-dimensional network structure. The difference of the material of the present invention from the conventional leather powder can clearly be recognized from the comparison of Fig. 7 showing an electron micrograph at 1000× magnification of the material of the present invention and Fig. 5 showing an electron micrograph at the same magnification of the conventional leather powder.

Table 1 is a comparative tabulation of the properties of the sheet thus obtained and those of a sheet as a control obtained by forming a water suspension of leather powder produced by a centrifugal crushing machine into a sheet by the same procedure under the same conditions.

**Table 1**

| | Example 1 | Control |
|---|---|---|
| Thickness (mm) | 0.064 | 0.47 |
| Tensile strength N/mm² (kg/cm²) | 36.28 (370) | 0.029 (0.3) |
| Elongation (%) | 8 | 3 |
| Density (g/cm³) | 0.8 | 0.4 |

Tensile strength and density were measured in accordance with "Leather Testing Method" specified in JIS K 6550.

### Example 2

Scraps of leather (Fig. 8) of 10% in moisture content produced by cutting in manufacturing a tannin leather products are crushed by the same machine as that used in Example 1. Then, 2000 g of a water suspension having a powder leather content of 2 wt % is prepared by dispersing 44.4 g of the leather powder (10% moisture content) in water.

The water suspension was processed five cycles for high-pressure homogenization under a pressure of 450 kg/cm² by the same apparatus. A slurry thus obtained had the following properties.
Viscosity (BL type viscometer):
420 mPa.s (cps)
400 mPa.s (cps) (twenty days after preparation)
pH: 2.8
The slurry was formed into a film on a glass plate by casting, and then the film was dried by the same procedure as employed in Example 1 to obtain a sheet.
Table 2 is a comparative tabulation of the properties of the sheet thus obtained and those of a sheet as a control 2 obtained by forming a water suspension of leather powder produced by a centrifugal crushing machine into a sheet by the same procedure under the same conditions.

**Table 2**

| | Example 2 | Control 2 |
|---|---|---|
| Thickness (mm) | 0.17 | 0.78 |
| Tensile strength N/mm² (kg/cm²) | 1.47 (15) | 0.010 (0.1) |
| Elongation (%) | 0.2 | 0.2 |
| Density (g/cm³) | 0.5 | 0.3 |

Tensile strength and density were measured in accordance with :Leather Testing Method" specified in JIS K 6550.

Figs. 1 and 2 are electron micrographs at 10,000× magnification of sheets obtained by forming slurries prepared by processing a suspension of crushed shaving scraps of tannin leather and that of crushed shaving scraps of chrome leather, respectively, by the same procedure as employed in Example 2, except that the suspensions were processed ten cycles for high-pressure homogenization. Although the scraps of leather are disintegrated somewhat less completely as compared with Example 1 shown in Fig. 1 and the sheets have some bundles each of several fibers, generally, the fiber bundles are disintegrated to a tolerable extent and the individual fibers entwine each other in a random arrangement.

## Claims

1. A sheet of collagen leather comprising collagen fibers of substantially uniform fineness having a diameter in the dried state of 0.02 to 0.3 µm, a length of at least 100 times of the diameter and being arranged at random as a whole, without being bundled, obtainable by
cutting natural leather into small pieces being less than about 3 mm in size,
preparing an aqueous slurry of 1 to 10 wt% of the cut leather pieces,
treating the slurry with a high pressure homogenizer to obtain a viscous slurry and
casting and drying the viscous slurry.

2. The sheet as claimed in claim 1, which comprises the collagen fibers having a diameter distribution such that 99% or more of the fibers have a diameter of 0.1 to 0.2 µm.

3. The sheet as claimed in claim 1 or 2 essentially consisting of the collagen fibers.

4. A process for producing a sheet of collagen leather comprising a collagen fiber of substantially uniform fineness having a diameter in the dried state of 0.02 to 0.3 µm, a length of at least 100 times of the diameter and being arranged at random as a whole without being bundled, said process comprising the steps of:
cutting natural leather into small pieces being less than about 3 mm in size,
preparing an aqueous slurry of 1 to 10 wt% of the cut leather pieces,
treating the slurry with a high pressure homogenizer to obtain a viscous slurry and
casting and drying the viscous slurry.

5. A slurry obtainable by
cutting natural leather into small pieces being less than about 3 mm in size,
preparing an aqueous slurry of 1 to 10 wt% of the cut leather pieces and
treating the slurry with a high pressure homogenizer.

6. The slurry as claimed in claim 5, which has a viscosity of not more than 10 Pa.s 10,000 cps at a concentration of 2 wt%.

## Patentansprüche

1. Collagenfolienleder, umfassend Collagenfasern mit einer im wesentlichen gleichmäßigen Feinheit mit einem Durchmesser im getrockneten Zustand von 0,02 bis 0,3 µm und einer Länge von mindestens dem 100fachen des Durchmessers, die insgesamt zufällig angeordnet sind, ohne gebündelt zu sein, erhältlich durch
- Schneiden natürlichen Leders in kleine Stücke mit einer Größe von weniger als etwa 3 mm,
- Herstellen einer wäßrigen Aufschlämmung aus 1 bis 10 Gew.-% der geschnittenen Lederstücke,
- Behandeln der Aufschlämmung mit einem Hochdruckhomogenisator, um eine viskose Aufschlämmung zu erhalten, und
- Formen und Trocknen der viskosen Aufschlämmung.

2. Folie nach Anspruch 1, die die Collagenfasern mit solch einer Verteilung des Durchmessers umfaßt, daß 99 % oder mehr der Fasern einen Durchmesser von 0,1 bis 0,2 µm aufweisen.

3. Folie nach Anspruch 1 oder 2, die im wesentlichen aus den Collagenfasern besteht.

4. Verfahren zum Herstellen eines Collagenfolienleders, umfassend Collagenfasern mit einer im wesentlichen gleichmäßigen Feinheit mit einem Durchmesser im getrockneten Zustand von 0,02 bis 0,3 µm und einer Länge von mindestens dem 100fachen des Durchmessers, die insgesamt zufällig angeordnet sind, ohne gebündelt zu sein, wobei das Verfahren die folgenden Stufen umfaßt:
- Schneiden natürlichen Leders in kleine Stücke mit einer Größe von weniger als etwa 3 mm,
- Herstellen einer wäßrigen Aufschlämmung aus 1 bis 10 Gew.-% der geschnittenen Lederstücke,
- Behandeln der Aufschlämmung mit einem Hochdruckhomogenisator, um eine viskose Aufschlämmung zu erhalten, und
- Formen und Trocknen der viskosen Aufschlämmung.

5. Aufschlämmung, erhältlich durch
- Schneiden natürlichen Leders in kleine Stücke mit einer Größe von weniger als etwa 3 mm,
- Herstellen einer wäßrigen Aufschlämmung aus 1 bis 10 Gew.-% der Lederstücke und
- Behandeln der Aufschlämmung mit einem Hochdruckhomogenisator.

6. Aufschlämmung nach Anspruch 5, die eine Viskosität von nicht mehr als 10 Pa.s (10.000 cps) bei einer Konzentration von 2 Gew.-% aufweist.

## Revendications

1. Feuille de cuir de collagène comprenant des fibres de collagène de finesse pratiquement homogène, dont le diamètre à l'état sec est de 0,02 à 0,3 µm et la longueur vaut au moins 100 fois le diamètre, et disposées dans leur ensemble de manière aléatoire sans former de faisceaux, ladite feuille étant obtenue par
- coupage du cuir naturel en petits morceaux de dimension inférieure à 3 mm environ,
- préparation d'une suspension aqueuse contenant de 1 à 10 % en poids des morceaux de cuir coupé,
- traitement de la suspension avec un homogénéiseur haute pression, afin d'obtenir une suspension visqueuse, et
- coulée puis séchage de la suspension visqueuse.

2. Feuille selon la revendication 1, qui comprend des fibres de collagène présentant une distribution de diamètres telle que 99 % ou plus de ces fibres ont un diamètre compris entre 0,1 et 0,2 µm.

3. Feuille selon la revendication 1 ou 2, constituée essentiellement des fibres de collagène.

4. Procédé de fabrication d'une feuille de cuir de collagène comprenant des fibres de collagène de finesse pratiquement homogène, dont le diamètre à l'état sec est de 0,02 à 0,3 µm et la longueur vaut au moins 100 fois le diamètre, et disposées dans leur ensemble de manière aléatoire sans former de faisceaux, ledit procédé comprenant les étapes suivantes:
- coupage du cuir naturel en petits morceaux de dimension inférieure à 3 mm environ,
- préparation d'une suspension aqueuse contenant de 1 à 10 % en poids des morceaux de cuir coupé,
- traitement de la suspension avec un homogénéiseur haute pression, afin d'obtenir une suspension visqueuse, et
- coulée puis séchage de la suspension visqueuse.

5. Suspension obtenue par :
- coupage du cuir naturel en petits morceaux de dimension inférieure à 3 mm environ,
- préparation d'une suspension aqueuse contenant de 1 à 10 % en poids des morceaux de cuir coupé, et
- traitement de la suspension avec un homogénéiseur haute pression.

6. Suspension telle que revendiquée dans la revendication 5, qui possède une viscosité non supérieure à 10 Pa.s (10.000 cps) à une concentration de 2 % en poids.
